# EUROPÄISCHE PATENTSCHRIFT

(11) **EP 1 530 748 B1**
(45) Veröffentlichungstag und Bekanntmachung des Hinweises auf die Patenterteilung: **15.02.2006**
(21) Anmeldenummer: 03790863.9
(22) Anmeldetag: 06.08.2003
(51) Int. Cl.: G05B 19/418

(54) **TEMPERATURMANAGEMENT IN NETZWERKEN MIT RINGTOPOLOGIE**
TEMPERATURE MANAGEMENT IN RING TOPOLOGY NETWORKS
GESTION DE TEMPERATURE DANS DES RESEAUX EN ANNEAU

(30) Priorität: 24.08.2002 DE 10238869
(43) Veröffentlichungstag der Anmeldung: 18.05.2005
(73) Patentinhaber: DaimlerChrysler AG, 70567 Stuttgart (DE)
(72) Erfinder: ENSSLIN, Ulrich, 70499 Stuttgart (DE); NIEMCZYK, Norbert, 75180 Pforzheim (DE); SEIB, Hans-Gerd, 70374 Stuttgart (DE)
(86) Internationale Anmeldenummer: PCT/EP2003/008679
(87) Internationale Veröffentlichungsnummer: WO 2004/021096

(56) Entgegenhaltungen:
- EP-A- 0 319 235
- US-A- 6 014 304
- US-B1- 6 216 956
- US-B1- 6 438 684

## Beschreibung

Die Erfindung betrifft ein Verfahren zum Temperaturmanagement und dessen Verwendung in einem Netzwerk.

Datenbusse für die Telekommunikation und Audiosysteme im Verkehrsmittel werden oft in Ring-Topologie ausgelegt. Die Daten werden dabei ringförmig durch jedes am Datenbus angeschlossene Gerät übertragen. Jedes am Datenbus angeschlossene Gerät weist einen Empfänger, einen Sender und ggf. einen Verstärker auf. Da das Signal jedes Gerät durchläuft, kann der Ausfall eines einzigen Geräts das gesamte Netzwerk zum Stillstand bringen (Grundlagen des Netzwerkbetriebs, 2. Auflage, Microsoft Press 1997, Seiten 44, 45, 801, 808).

Ein Ausfall von Bauteilen, die der Datenübertragung dienen, haben in einem Netzwerk mit Ring-Topologie besonders schwere Folgen. Ein fehlerhaftes Bauteil bewirkt den Ausfall der Datenkommunikation aller Netzwerkteilnehmer.

Elektronische Bauteile, die zur Kommunikation in Netzwerken mit Ring-Topologie eingesetzt werden, müssen damit besonders gegen Beschädigung oder Zerstörung geschützt sein.

Opto-elektronische Sende- und Empfangseinheiten in Netzwerken mit Ring-Topologie sind in Industrie- sowie Medizinanwendungen und im Verkehrsmittel im Einsatz. Eine besonders große Rolle spielen opto-elektronischen Sende- und Empfangseinheiten insbesondere in der multimedialen Vernetzung von Fahrzeugen in Verbindung mit optischen Bussystemen in Ring-Topologie.

Opto-elektronische Systeme werden in der Multimedia-Networking-Technologie MOST (Media Oriented Systems Transport) eingesetzt. Diese Technologie wurde von verschiedenen Automobilherstellern und Zulieferer auf Basis eines optischen Bussystems entwickelt, welche speziell für den Einsatz im Infotainment-Bereich eines Fahrzeugs konzipiert wurde. Weitere Informationen zum Thema MOST finden sich beispielsweise in der Zeitschrift Elektronik,14/2000, Seite 54 ff und unter http://www.mostnet.de.

Opto-elektronischen Sende- und Empfänger-Einheiten sind für eine Beschädigung oder Zerstörung wegen Überhitzung anfällig, da opto-elektronischen Einheiten aus technischen Gründen auf eine maximale Betriebstemperatur beschränkt sind. Gerade bei Einsatzbedingungen in denen die Umgebungstemperatur opto-elektronischer Einheiten aufgrund der Umweltbedingungen auf Werte oberhalb der zugelassenen Betriebstemperatur steigt, kann es zum Totalausfall des Bauteils und damit des Netzwerks kommen.

Beim Einsatz von Datenbussystemen in Fahrzeugen, also Einsatz von Steuergeräten, die über Sende-/Empfangseinheiten an einen Datenbus angeschlossen sind, kann die Umgebungstemperatur aufgrund mehrerer Gründe ansteigen. Beispielsweise durch Nutzung des Fahrzeugs in Gegenden mit Extrem-Temperaturen wie Death Valley in USA oder Positionierung eines an den Datenbus angebundenen Steuergeräts an einer Stelle im Fahrzeug mit hoher Temperaturentwicklung wie beispielsweise Motor oder Auspuffanlage. Zudem kann ein Steuergerät selbst aufgrund seiner Funktionsweise eine hohe Verlustleistung erzeugen, wie dies beispielsweise bei einem Soundverstärker der Fall ist, womit die Temperatur des Steuergeräts ebenfalls zunimmt. Steigt die Temperatur des Steuergeräts, steigt ebenfalls die Temperatur des korrespondierenden Sende-/Empfangseinheit. Bei Überschreiten der Maximaltemperatur der Sende-/Empfangseinheit wird diese irreversibel zerstört und aufgrund der Ring-Topologie bricht die Netzwerk-Kommunikation zusammen. Damit wird die Zuverlässigkeit des Netzwerks von der Sende-/Empfangseinheit bestimmt.

Aus der WO 99/33294 ist ein Verfahren und eine Vorrichtung zum Temperaturmanagement in kabellosen Telekommunikations-Netzwerken offenbart. Hierbei wird bei Anstieg der in einer Basis-Station gemessenen Temperatur mittels der korrespondierenden mobilen Einheiten der Transceiver in der Basis-Station abgeschaltet. Nach Abkühlen der Basis-Station werden die Transceiver in der Basis-Station von den mobilen Einheiten erneut zugeschalten. Das Verfahren ermöglicht bei Überhitzung der Basis-Station eine Reduzierung der Betriebstemperatur. Die Ausfallwahrscheinlichkeit der Basis-Station wird heruntergesetzt.

Die DE 100 12 270 A1 offenbart einen optischen Header für Komponenten, die an einen optischen Datenbus in Ring-Topologie angeschlossen sind und die einen den Eingangs- und Ausgangs-Port des Headers verbindenden Bypass aufweisen. Der optische Header steuert die angeschlossenen Komponenten und dient dazu, den Datenaustausch zwischen dem Datenbus und den an den Header angeschlossenen Komponenten zu ermöglichen.

Die DE 197 26 763 A1 offenbart eine Kopplungsanordnung für ein Master-Slave-Bussystem in Ring-Topologie, welche ein rückwirkungsfreies Ankoppeln oder Abkoppeln jedes Slave-Teilnehmers ermöglicht. Hierbei wird die schnelle und direkte Ansteuerung ohne Teilnehmeradressen so kurzzeitig unterbrochen, dass eine Beeinflussung der über das Bussystem verbundenen Steuerungs- oder Rechnersysteme nicht erfolgt.

Die US 6,014,304 offenbart eine vernetzte Steuerschaltung für unterschiedliche Funktionen im Fahrzeug. Dabei wird die Temperatur in den einzelnen Aktoren erfasst und es wird ein Steuersignal erzeugt, wenn die Temperatur einen Schwellwert überschreitet.

Es ist die Aufgabe der vorliegenden Erfindung ein Verfahren für ein Datenbussystem zu entwickeln, welches die Ausfallsicherheit eines Netzwerks mit Ring-Topologie erhöht.

Diese Aufgabe wird erfindungsgemäß durch die Merkmale des Anspruchs 1 gelöst. Danach wird die Temperatur nahe bei der Sende-/Empfangseinheit mindestens eines Steuergeräts gemessen und sobald die Temperatur an der Sende-/Empfangseinheit des Steuergeräts eine vorgegebene kritische Temperatur Tₖᵣᵢₜ übersteigt, wird die Sende-/Empfangseinheit abgeschaltet, Weckanforderungen auf das Netzwerk seitens der Steuergeräte werden blockiert und die Blockierung der Weckanforderungen wird aufgehoben, sobald die Temperatur der Sende-/Empfangseinheit innerhalb einer vorgegebenen Zeitspanne auf eine Temperatur unter der vorgegebenen kritischen Temperatur Tₖᵣᵢₜ und unter einer vorgegebenen Schwellwert-Temperatur Tₜₕ gefallen ist, wobei die Schwellwert-Temperatur Tₜₕ unter der kritischen Temperatur Tₖᵣᵢₜ liegt.

Die Sende-/Empfangseinheiten können elektronische, opto-elektronische oder auch optische Sende-/Empfangseinheiten sein. Die Sende-/Empfangseinheiten werden oft auch Bustreiber, Transceiver oder einfach nur Netzwerkbauteile bezeichnet.

Das Verfahren hat den Vorteil, dass es zu keiner irreversiblen Zerstörung der Sende-/Empfangseinheiten kommt, da die Sende-/Empfangseinheiten vor der Zerstörung durch Überhitzung abgeschalten werden.

Bei einer Weiterführung des erfindungsgemäßen Verfahrens werden die nicht von der Überhitzung betroffenen Steuergeräte informiert, so dass diese entsprechende sicherheitsrelevante oder präventive Vorgänge vor Abschalten des Netzwerks einleiten können.

Idealerweise wird bei Überhitzungsgefahr des Steuergeräts die Wärmeentwicklung im Steuergerät minimiert, indem nur die Gerätefunktionen aufrechterhalten werden, welche zur weiteren Überwachung notwendig. Das sind der Weckbereitschaftsmodus des Steuergeräts und die Temperaturmessung der Sende-/Empfangseinheit des Steuergeräts. Dies erfolgt über Ruhestromversorgung der entsprechenden Bauteile.

Um weitere Wärmeentwicklung zu vermeiden wird geprüft, ob die Aktivierung der Klimatisierungsautomatik oder eines Gebläses die Temperatur an dem betreffenden Ort im Fahrzeug reduzieren kann. Zudem können Hitzschutzmittel wie Sonnenblenden oder Hitze-Reflektoren zum Einsatz gebracht werden.

Die präventiven Sicherheitsmaßnahmen schließen insbesondere die Reduzierung oder Abschaltung von eigene Wärmequellen ein: Beispielsweise können Motorsteuergeräte dafür sorgen, dass der Motor nur noch mit niederen Umdrehungszahlen gefahren werden kann, um Wärmeentwicklung zu vermeiden. Steuergeräte mit hoher Verlustleistung werden abgeschaltet.

Des Weiteren können die Überhitzungsdaten, also Steuergerät und Temperatur, zur Datenerfassung an eine externe Zentrale gesendet werden. Hierdurch kann bei einem Werkstattaufenthalt des Fahrzeugs das entsprechende Steuergerät und dessen Umfeld auf mögliche Fehler untersucht werden.

Da die Zeit des Funktionsausfalls des Netzwerks auf eine minimale Zeitspanne begrenzt ist, kann der Ausfall des Netzwerks reversibel gemacht werden. Durch Optimierung der vorgegebenen Zeitspanne kann die Ausfallsdauer des Netzwerks minimal gehalten werden.

Idealerweise eignet sich das Verfahren zum Einsatz in Datenbussystemen in Verkehrsmitteln. In dem Datenbussystem ist der Sensor ein nahe bei der Sende-/Empfangseinheit positionierter Temperatursensor. Zudem sind Weckmittel für den Datenbus und Sende-/Empfangseinheit-Abschaltmittel vorhanden. Zusätzlich ist ein Mittel vorhanden, welches mit dem Weckmittel, und dem Sende-/Empfangseinheit-Abschaltmittel und dem digitalen Temperatursignal zusammenwirkt, um bei Überschreiten einer vorgegebenen kritischen Temperatur Tₖᵣᵢₜ die Sende-/Empfangseinheit abzuschalten und das Weckmittel zu blockieren.

Die Positionierung des Temperatursensors nahe bei der Sende-/Empfangseinheit erlaubt eine optimale Temperaturkontrolle der Sende-/Empfangseinheiten.

Das Zusammenwirken des Weckmittels, des Abschaltmittels sowie der digitalen Temperatursignale erfolgt Idealerweise über ein softwaretechnisch oder hardeware-technisch ausgeführtes Mittel. Dieses direkte Zusammenwirken über ein Mittel erlaubt die optimale Umsetzung des erfindungsgemäßen Verfahrens.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In der Zeichnung sind eine Ausführungsform des erfindungsgemäßen Verfahrens und eine entsprechende Vorrichtung dargestellt. Es zeigen jeweils in schematischer Darstellung,
- Fig. 1: eine Netzstruktur in Ring-Topologie,
- Fig. 2: einen Temperaturverlauf in einer Sende-/Empfangseinheit mit und ohne Energiesparmodus und
- Fig. 3: ein Steuergerät.

Das erfindungsgemäße Verfahren zum Temperaturmanagement ist in der Multimedia-Netzwerk-Technologie MOST, also als optisches Ring-Bussystem 1 für Infotainment-Anwendungen im Fahrzeug, ausgebildet. Die Steuergeräte 2 tauschen mittels Sende-/Empfangseinheiten 5 Daten über das Bussystem 1 aus. Die Temperatur wird an den Sende-/Empfangseinheiten 5 gemessen. Sobald die Temperatur an einer Sende-/Empfangseinheit 5 eines Steuergeräts 2 eine vorgegebene kritische Temperatur übersteigt, wird die Sende-/Empfangseinheit 5 abgeschaltet und Weckanforderungen auf das Bussystem 1 seitens der weiteren Steuergeräte 2 werden blockiert.

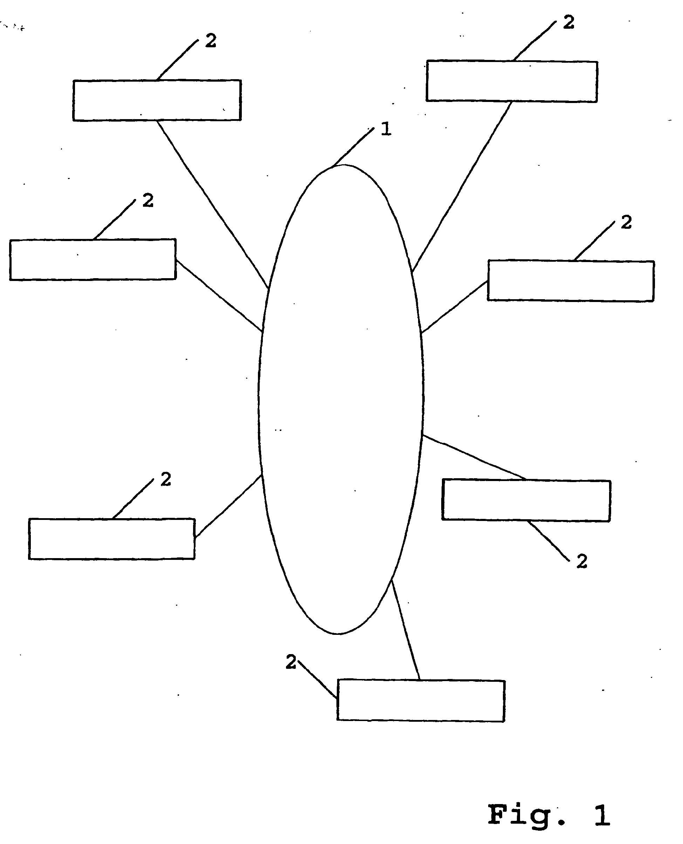

In Fig. 1 ist die Netzstruktur von einem MOST-Netzwerk 1 abgebildet. Diese umfasst eine Ring-Topologie, die als geschlossene Schleife ausgebildet ist. Das Netzwerk 1 ist als optisches Bussystem ausgebildet, welches polymeroptische Lichtleiter als Übertragungsmedium verwendet.

In der Figur 1 sind mehrere Steuergeräte 2 an das Netzwerk 1 angeschlossen, die über das Netzwerk 1 Daten austauschen. Die Steuergeräte 2 sind sogenannte MOST-Devices. Diese können an ein MOST-Netzwerk 1 angeschlossen werden. Beispielhafte Steuergeräte 2 im Ausführungsbeispiel für Infotainment-Anwendungen im Fahrzeug sind Mensch-Maschine-Schnittstelle, Sprachbedienung, Navigation, Internet, PC-Schnittstelle, Sound-System, Handy, Kopfhörer, Telematik-Anwendungen, Medienlaufwerke wie CD, MD, DVD usw.

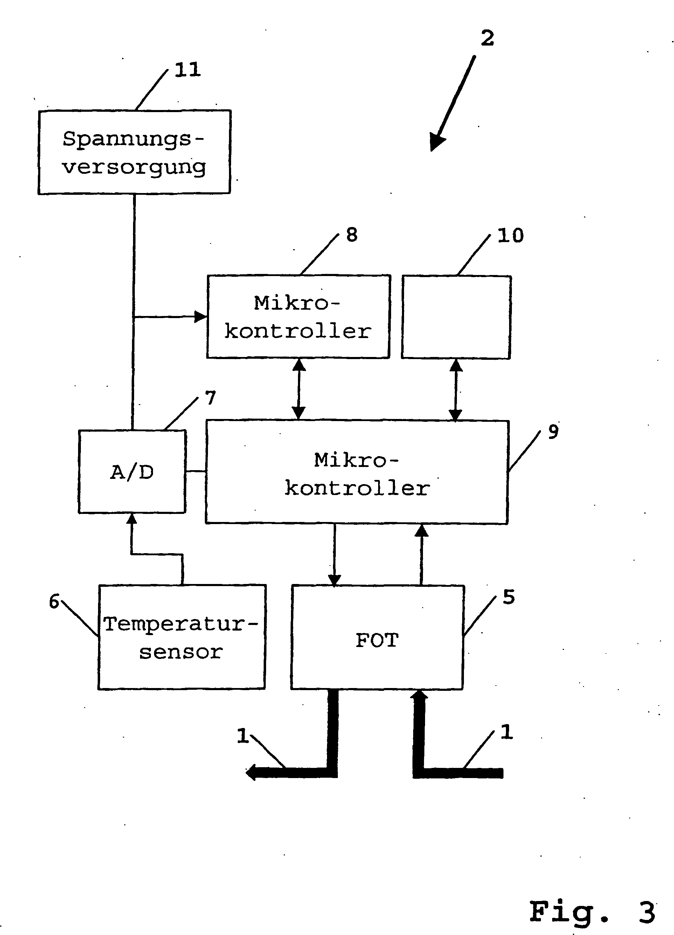

In Figur 3 ist ein Steuergerät 2 mit einer in das Steuergerät 2 integrierten Temperaturkontrolleinheit abgebildet. Das Gerät 2 enthält neben der oben beispielhaft aufgeführten Gerätefunktionseinheit 10 sowie der Temperaturkontrolleinheit, einen Mikrokontroller 9 eines MOST-Transceivers mit optoelektronischer Sende-/Empfangseinheit 5, zur Kommunikation im MOST-Netzwerk 1.

Die Umwandlung der elektrischen Signale in optische Signale und umgekehrt erfolgt über opto-elektronische bzw. faseroptische Sende-/Empfangs-Einheiten 5, sogenannte FOT (Fiber Optical Transceiver). Jedes Steuergerät 2 wird über einen standardisierten Stecker mit dem Übertragungsmedium, dem optischen Bussystem 1, verbunden.

Die Buskommunikation übernimmt der MOST-Transceiver bestehend aus dem Mikrokontroller 9 sowie der opto-elektronischen Sende-/Empfangseinheit 5. Der MOST-Transceiver stellt auf der unteren Ebene die Basisfunktionen des Netzmanagements zur Verfügung. Diese beinhalten unter anderem die Mechanismen für den Transport der einzelnen Dienste. Darüber liegt die bereits zum Netzwerk zählende Ebene der "NetServices", die auf dem Mikrokontroller laufen. Die "NetServices" bestehen aus den Mechanismen und Routinen zum Betrieb und Verwaltung des Netzes.

Zudem ist in Figur 3 die im Steuergerät 2 enthaltene Temperaturkontrolleinheit abgebildet. Diese besteht aus einem Temperatursensor 6, einem A/D-Wandler 7, einer Stromversorgungseinheit 11 und einem Mikrokontroller 8, welcher die Temperaturwerte überwacht und die Interaktion zwischen Steuergerätfunktionseinheit 10 und Kommunikation mit dem Bussystem 1 veranlasst.

Der Temperatursensor 6 ist in der Lage die Temperatur mit einer Genauigkeit von ± 1 Grad Kelvin zu messen. Die Temperaturmessung erfolgt in der unmittelbaren Umgebung der opto-elektronischen Sende-/Empfangseinheit 5. Üblicherweise wird ein Abstand von circa 10 mm gewählt zwischen der zu messenden opto-elektronischen Sende-/Empfangseinheit 5 und dem Temperatursensor 6 gewählt. Alternativ kann der Temperatursensor 6 auch an einer anderen Position im Gerät 2 angebracht werden, sofern die Temperaturwerte zwischen der opto-elektronischen Sende-/Empfangseinheit 5 und der eigentlichen Messstelle korreliert sind.

Die Temperaturkontrolleinheit ist mit einem softwaretechnisch umgesetzten Programm, welches auf dem Mikrokontroller 8 läuft, zur Ausführung der erfindungsgemäßen Verfahrensschritte ausgestattet.

Bei Überschreiten der Maximaltemperatur der opto-elektronischen Sende-/Empfangseinheit 5 wird dieser irreversibel zerstört und aufgrund der Ring-Topologie des Netzwerks 1 bricht die Netzwerk-Kommunikation zusammen. Um dies zu vermeiden ist in jedem Steuergerät 2 die Temperaturkontrolleinheit integriert. Diese Temperaturkontrolleinheit ist in der Lage einen Temperaturanstieg zu erkennen und entsprechende Schutzmaßnahmen zu ergreifen.

Die Temperatur in der opto-elektronischen Sende-/Empfangseinheit 5 wird kontinuierlich mittels der Temperatursensors 6 gemessen und vom Mikrokontroller 8 verarbeitet.

Steigt die Temperatur über einen Wert T_{inf} werden alle weiteren Teilnehmer 2 des Rings 1 von der Temperaturkontrolleinheit mittels der "NetServices" über den Temperaturanstieg und der damit möglichen Überhitzung informiert. Hierbei wird die Variable "Temperatur" auf den Wert "Warnung" gesetzt.

Für die Benachrichtigung durch die Temperaturkontrolleinheit ist es unerheblich, ob der Temperaturanstieg während des laufenden Betriebs oder direkt nach Start des Systems erfolgt. Die Benachrichtigung erfolgt mittels der oben erwähnten "NetServices".

Mit dieser Benachrichtigung werden weitere präventive Schutzmassnahmen eingeleitet. So aktiviert beispielsweise das Steuergerät 2, welches die Schnittstelle zum Mobiltelefon bildet, automatisch beim Provider die Mailbox des Mobiltelefons. Dies ist notwendig, da bei eingetretener Überhitzung diese Umschaltung nicht mehr erfolgen kann und zudem keine Anrufe mehr entgegengenommen werden können.

Ebenso wird der Dienst Tele-Aid, welcher im Notfall per SMS-(Short Message Services)-Nachricht über eine externe Zentrale Hilfe anfordert, auf Minimalst-Modus geschalten, der sich dadurch auszeichnet, dass die Netzwerkfunktionalität nicht mehr benötigt wird. Das Steuergerät 2 muss also nicht mehr auf das Bussystem 1 zugreifen.

Bei der Benachrichtigung der Netzteilnehmer 2 durch die Temperaturkontrolleinheit erfolgt ebenfalls eine Benachrichtigung an den Fahrer. Dies wird realisiert indem ein Mensch-Maschine-Schnittstelle-Steuergerät 2 (MMI-Controller) eine entsprechende Information an den Fahrer ausgibt, sobald die Variable "Temperatur" auf den Wert "Warnung" gesetzt wird bzw. die Nachricht über Abschaltung des optischen Datenbusses 1 ausgegeben wird. Insbesondere erhält der Fahrer eine Information darüber, dass möglicherweise das Infotainment wegen Überhitzung abgeschalten wird und dass beispielsweise sein Mobiltelefon auf die Mailbox umgeschalten wurde.

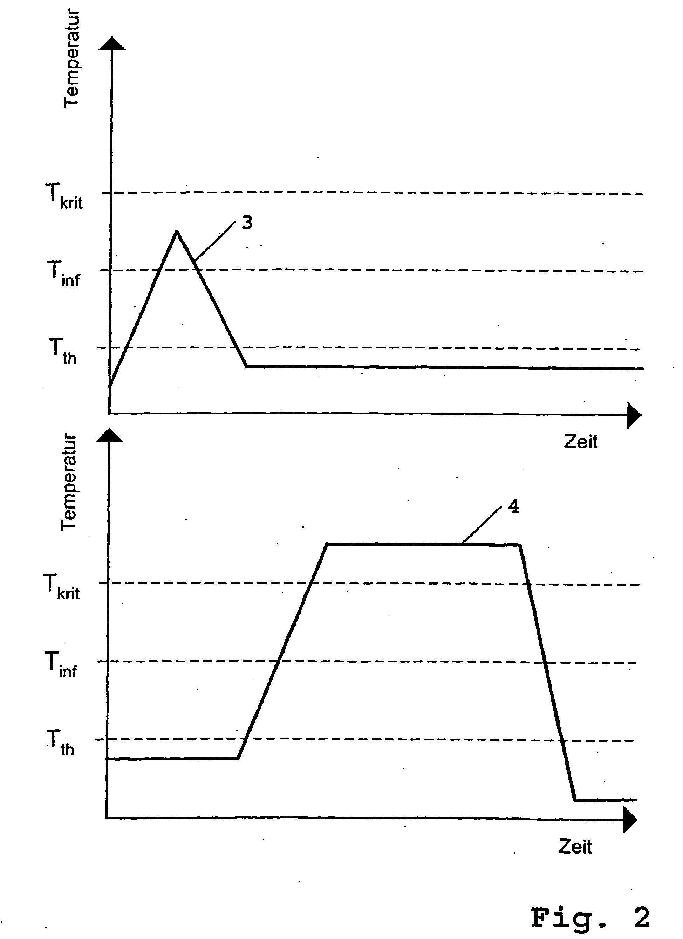

Fällt die Temperatur in der opto-elektronischen Sende-/Empfangseinheit 5 wieder auf eine Temperatur unter einen Schwellenwert Tₜₕ, ist der Temperaturanstieg überwunden. Die Temperaturkontrolleinheit benachrichtigt alle Teilnehmer des Rings 1 mittels der "NetServices", indem die Temperaturkontrolleinheit die Variable "Temperatur" auf den Wert "Normal" setzt. In Figur 2 ist der korrespondierende Temperaturverlauf 3 der opto-elektronischen Sende-/Empfangseinheit 5 als Funktion der Zeit aufgetragen.

Steigt die Temperatur in der opto-elektronischen Sende-/Empfangseinheit 5 dagegen weiter an und überschreitet eine für den Betriebszustand der opto-elektronischen Sende-/Empfangseinheit 5 kritische Temperaturschwelle "Tₖᵣᵢₜ", wird die Spannungsversorgung der opto-elektronischen Sende-/Empfangseinheit abgeschalten und die Weckbereitschaft für das Netzwerk 1 blockiert. Vor dem Abschalten der überhitzten opto-elektronischen Sende-/Empfangseinheit 5 benachrichtigt die Temperaturkontrolleinheit die weiteren Netzteilnehmer 2 von der bevorstehenden Abschaltung des optischen Bussystems 1. Die weitern Netzteilnehmer 2 schalten sich daraufhin in einen Bereitschaftsmodus ab. Der Bereitschaftsmodus ist dadurch gekennzeichnet, dass den Steuergeräten 2 genügend Ruhestrom für die Bereitschaftsfunktion zur Verfügung steht.

Beispielsweise ist bei einer Schließ-Funk-Fern-Bedienung eines Fahrzeugs, beim Abschalten des Fahrzeugs das Steuergerät 2 mit dem Funk-Sensor im Bereitschaftsmodus. Das heißt der Funk-Sensor erhält soviel Ruhestrom, dass dieser bei Auftreten eines Funk-Signals der Fern-Bedienung dieses Signal erfassen kann. Daraufhin weckt das Steuergerät 2 den Bus 1. Die Steuergeräte 2 sind ebenfalls im Bereitschaftsmodus auf Signale vom Bussystem 1.

Ein weiterer Netzteilnehmer 2 kann auch nur die opto-elektronische Sende-/Empfangseinheit 5 abschalten, sofern er seine Funktion auch ohne Buskommunikation erfüllen kann.

Zudem wird für spätere Diagnosezwecke ein Fehlercode DTC (Detected Trouble Code) gespeichert. In dem Ausführungsbeispiel wird nach Benachrichtigung der Netzteilnehmer 2 in dem Diagnosespeicher eines speziell dafür vorgesehenen Steuergeräts 2 der Fehlercode zusammen mit den Umgebungsdaten "Kilometer-Stand" in folgendem Format abgelegt: Dd dd ss hh yy km km km (Dd dd = "Fehlercode für kritische Sende-/Empfangseinheit-Temperatur", ss = status "aktiv/passiv", hh = "Fehlerzähler", yy = "MainFBlockID", km km km = "Kilometer-Stand mit Hi-Mid-Lo-Byte"). Dieser Fehlercode kann nur von einem speziellen Diagnoseprogramm ausgelesen und gelöscht werden.

Zur Abkühlung der überhitzten opto-elektronischen Sende-/Empfangseinheit 5 wird das Steuergerät 2 in einen Energiesparmodus gefahren, in dem nicht benötigte Anwendungen heruntergefahren werden, die opto-elektronische Sende-/Empfangseinheit 5 abgeschalten wird und die Temperaturkontrolleinheit weiterhin aktiviert bleibt. Mit dieser Maßnahme wird die Generierung von Wärme auf ein Mindestmaß reduziert. Der Energiesparmodus eines Steuergeräts 2 entspricht damit dem Bereitschaftsmodus eines Steuergeräts 2 mit dem Unterschied, dass im Energiesparmodus zusätzlich die Temperaturkontrolleinheit mit Strom versorgt werden muss. Der Stromverbrauch sollte auch im Energiesparmodus so gering als möglich sein, um die Batterie des Fahrzeugs nicht unnötig zu belasten. Damit übersteigt im Allgemeinen der Energiesparmodus den Ruhestrombedarf des Bereitschaftsmodus.

In diesem Energiesparmodus blockiert die Temperaturkontrolleinheit die Weck-Leitung des optischen Datenbusses 1, um die Weckbereitschaft des Netzwerks 1 zu unterbinden. In dem Ausführungsbeispiel ist die Weck-Leitung des optischen Datenbusses 1 als elektrische Leitung realisiert. Die Blockierung erfolgt, in dem die elektrische Leitung auf Masse geschalten wird. Damit kann kein weiteres Steuergerät 2 eine Nachricht über den Ring 1 versenden.

Der Energiesparmodus wird nur über eine maximal vorgegebene Zeitdauer aufrechterhalten, um die Batterie des Fahrzeugs nicht zu Entleeren. Üblicherweise wird bei MOST-Systemen in Fahrzeugen mit durchschnittlichen Batterien die Zeitdauer auf maximal 30 Minuten beschränkt.

Sofern sich die überhitzte opto-elektronische Sende-/Empfangseinheit 5 in dieser vorgegebenen Zeitspanne auf eine Temperatur unterhalb des Schwellenwertes Tₜₕ abkühlt, wird die Weckbereitschaft des Netzwerks 1 wieder freigegeben, indem die Weck-Leitung von der Masse genommen wird. WeckAnforderungen der Netzteilnehmer 2 können damit den Ring 1 im Normalzustand hochfahren.

In Figur 2 ist beispielhaft der Temperaturverlauf 4 in einer opto-elektronischen Sende-/Empfangseinheit 5 mit Energiesparmodus als Funktion der Zeit abgebildet. Der Energiesparmodus startet im Verlauf der Kurve 4 an dem Zeitpunkt an dem die Temperatur in der opto-elektronischen Sende-/Empfangseinheit den Wert Tₖᵣᵢₜ übersteigt und endet an dem Zeitpunkt an dem die Temperatur in der opto-elektronischen Sende-/Empfangseinheit auf den ersten Wert unterhalb des Schwellenwerts Tₜₕ gefallen ist. Dieser Zeitabschnitt darf die vorgegebene Zeitspanne bis zur Abkühlung, hier 30 Minuten, nicht überschreiten.

Kühlt die überhitzte opto-elektronische Sende-/Empfangseinheit 5 des Geräts 2 in der vorgegebenen Zeitspanne von 30 Minuten nicht auf eine Temperatur unterhalb des Schwellenwertes Tₜₕ ab, so ist der Energiesparmodus überschritten. Das Steuergerät 2 wird in den Bereitschaftsmodus abgeschalten. Bei der Abschaltung wird auch die Schaltung der Weck-Leitung auf Masse wieder aufgehoben. Das Gerät 2 kann sich seinen Ruhestrom ziehen. Die Temperaturkontrolleinheit verbraucht keinen Strom mehr.

In diesem Zustand kann das MOST-Netzwerk 1 wieder über WeckAnforderungen seitens der weiteren Netz-Teilnehmer 2 aktiviert werden. Sollte sich die überhitzte opto-elektronische Sende-/Empfangseinheit 5 des Steuergeräts 2 bis zum nächsten Wecken durch einen Netzteilnehmer 2 nicht abgekühlt haben, würde das betreffende Gerät 2 über das erfindungsgemäße Verfahren wieder in den Energiesparmodus geschalten werden.

Üblicherweise werden bei MOST-Systemen in Fahrzeugen für die definierten Temperaturabschnitte folgende Werte

| | |
|---|---|
| Tₜₕ | + 75 °C |
| T_{inf} | + 80 °C |
| Tₖᵣᵢₜ | + 85 °C |

eingesetzt. Wie bereits oben ausgeführt werden die Temperaturwerte durch die Betriebstemperatureigenschaften der im Netzwerk mit Ring-Topolgie 1 eingesetzten Sende-/Empfangs-Einheiten 5 bestimmt. Hier im Ausführungsbeispiel entspricht dies den Temperatureigenschaften der opto-elektronischen Sende-/Empfangseinheit 5.

Das Steuergerät 2 im Ausführungsbeispiel könnte aber auch ein beliebiges Steuergerät sein; wie es in Verkehrsmitteln, Industrieanwendungen oder Medizin als Sensor, Aktor oder zur Steuerung zum Einsatz kommt.

In dem Ausführungsbeispiel ist das Netzwerk 1 ein MOST-Netzwerk. Das Verfahren kann aber auch bei anderen Bussystemen wie CAN, D2B, FlexRay usw. eingesetzt werden.

Die Sende-/Empfangseinheit 5 muss keine optische Komponente aufweisen. Das Verfahren und die Vorrichtung kann auch auf eine elektrische Sende-/Empfangseinheit oder ein optische Send-/Empfangseinheit angewendet werden.

Die Temperaturkontrolleinheit ist aus kostentechnischen Gründen im Steuergerät implementiert. Es könnte aber auch als unabhängige Einheit außerhalb des Steuergeräts im jeweiligen Anwendungsfalle angebracht sein. Einschränkend ist hierbei nur die Positionierung des Temperatursensors 6.

## Patentansprüche

1. Verfahren zum Temperaturmanagement in einem Netzwerk (1) mit Ring-Topologie, wobei Steuergeräte (2) mittels Sende-/Empfangseinheiten (5) Daten über das Netzwerk (1) austauschen, die Temperatur bei mindestens einem Steuergerät (2) gemessen wird, **dadurch gekennzeichnet, dass**
- die Temperatur bei der Sende-/Empfangseinheit (5) mindestens eines Steuergeräts (2) gemessen wird und
- sobald die Temperatur an der Sende-/Empfangseinheit (5) des Steuergeräts (2) eine vorgegebene kritische Temperatur Tₖᵣᵢₜ übersteigt,
- die Sende-/Empfangseinheit (5) abgeschaltet wird,
- Weckanforderungen auf das Netzwerk (1) seitens der Steuergeräte (2) blockiert werden und
- die Blockierung der Weckanforderungen aufgehoben wird, sobald die Temperatur der Sende-/Empfangseinheit (5) innerhalb einer vorgegebenen Zeitspanne auf eine Temperatur unter der vorgegebenen kritischen Temperatur Tₖᵣᵢₜ und unter einer vorgegebenen Schwellwert-Temperatur Tₜₕ gefallen ist, wobei die Schwellwert-Temperatur Tₜₕ unter der kritischen Temperatur Tₖᵣᵢₜ liegt,
- sobald die Temperatur der Sende-/Empfangseinheit (5) die vorgegebene kritische Temperatur Tₖᵣᵢₜ übersteigt das Steuergerät (2) in einen Energiesparmodus gefahren wird oder ein Fehlercode für Diagnosezwecke gespeichert wird.

2. Verfahren nach Anspruch 1, **dadurch gekennzeichnet, dass** das Steuergerät (2) in einen Energiesparmodus gefahren wird, in dem der Weck-Bereitschaftsmodus des Steuergeräts (2) und die Temperaturmessung bei der Sende-/Empfangseinheit (5) des Steuergeräts (2) sichergestellt werden.

3. Verfahren nach Anspruch 1, **dadurch gekennzeichnet, dass**
- bei Erreichen einer vorgegebenen Temperatur T_{inf}, welche unter der vorgegebenen kritischen Temperatur Tₖᵣᵢₜ und über einer vorgegebenen Schwellwert-Temperatur Tₜₕ liegt,
- eine Benachrichtigung der weiteren Steuergeräte (2), des Fahrers sowie externer Servicestellen über eine mögliche Überhitzung erfolgt und/oder präventive Schutzmaßnahmen getroffen werden.

4. Verfahren nach Anspruch 3, **dadurch gekennzeichnet, dass** die präventiven Schutzmaßnahmen
- Aktivierung der Klimatisierungsautomatik und/oder
- Abschaltung von Wärmequellen und/oder
- Aktivierung von Hitzeschutzmitteln und/oder
- Aktivierung einer Notlauffunktion eines Steuergeräts, welche ohne Netzwerkfunktionalität einsetzbar ist, beinhalten.

5. Verfahren nach Anspruch 1, **dadurch gekennzeichnet, dass** das Steuergerät (2) in einen Bereitschaftsmodus gefahren oder abgeschaltet wird, wenn die Temperatur der Sende-/Empfangseinheit (5) während der Dauer einer vorgegebenen Zeitspanne über der kritischen Temperatur Tₖᵣᵢₜ liegt oder gleich der kritischen Temperatur Tₖᵣᵢₜ ist.

6. Verfahren nach Anspruch 1, **dadurch gekennzeichnet, dass**
- das Netzwerk (1) als optisches Datenbus-Netzwerk (1) mit elektrischer Weck-Leitung ausgelegt wird und
- die Blockierung der Weckanforderungen erfolgt, indem die Weck-Leitung auf Masse gelegt wird.

7. Verfahren nach Anspruch 1, **dadurch gekennzeichnet, dass** die kritische Temperatur Tₖᵣᵢₜ der maximalen Betriebstemperatur der Sende-/Empfangseinheiten entspricht.

## Claims

1. Method of managing temperature in a network (1) with ring topology, whereby control devices (2) exchange data across the network (1) by means of transmitter/receiver units (5) and the temperature of at least one control device (2) is measured, **characterised in that**
- the temperature at the transmitter/ receiver unit (5) of at least one control device (2) is measured and
- as soon as the temperature at the transmitter/receiver unit (5) of the control device (2) exceeds a pre-set critical temperature T_{crit},
- the transmitter/ receiver unit (5) is switched off,
- wake-up requests to the network (1) from the control devices (2) are blocked and
- the block on the wake-up requests is lifted as soon as the temperature of the transmitter/ receiver unit (5) has dropped to a temperature below the pre-set critical temperature T_{crit} and below a pre-set threshold temperature Tₜₕ within a pre-set period, which threshold temperature Tₜₕ lies below the critical temperature T_{crit},
- as soon as the temperature of the transmitter/receiver unit (5) exceeds the pre-set critical temperature T_{crit}, the control device (2) is switched to a power-save mode or an error code is stored for diagnostic purposes.

2. Method as claimed in claim 1, **characterised in that** the control device (2) is switched to a power-save mode in which the wake-up standby mode of the control device (2) and the temperature measurement at the transmitter/ receiver unit (5) of the control device (2) are guaranteed.

3. Method as claimed in claim 1, **characterised in that**
- when a pre-set temperature T_{inf} is reached, which is below the pre-set critical temperature T_{crit} and above a pre-set threshold temperature Tₜₕ,
- a message is sent to the other control devices (2), to the driver and to external service points about a potential over-heating and/or preventive protective measures are initiated.

4. Method as claimed in claim 3, **characterised in that** the preventive protective measures comprise
- activation of the automatic air-conditioning system and/or
- switching off heat sources and/or
- activating heat protection means and/or
- activating an emergency mode function of a control device, which can be used without network functionality.

5. Method as claimed in claim 1, **characterised in that** the control device (2) is switched to a standby mode or switched off if the temperature of the transmitter/ receiver unit (5) lies above the critical temperature T_{crit} or is equal to the critical temperature T_{crit} for the duration of a pre-set time.

6. Method as claimed in claim 1, **characterised in that**
- the network (1) is designed as an optical data bus network (1) with an electric wake-up line and
- wake-up requests are blocked by switching the wake-up line to ground.

7. Method as claimed in claim 1, **characterised in that** the critical temperature T_{crit} corresponds to the maximum operating temperature of the transmitter/receiver units.

## Revendications

1. Procédé de gestion de température dans un réseau (1) en anneau, dans lequel des appareils de commande (2) échangent des données sur le réseau (1) au moyen d'unités d'émission/de réception (5), la température étant mesurée sur au moins un appareil de commande (2), **caractérisé en ce que**
- la température est mesurée sur l'unité d'émission/de réception (5) d'au moins un appareil de commande (2) et
- dès que la température sur l'unité d'émission/de réception (5) de l'appareil de commande (2) dépasse une température critique prédéfinie Tₖᵣᵢₜ,
- l'unité d'émission/de réception (5) est arrêtée,
- des demandes de réveil sur le réseau (1) sont bloquées du côté des appareils de commande (2) et
- le blocage des demandes de réveil est levé dès que la température de l'unité d'émission/de réception (5) est tombée en l'espace d'un intervalle de temps prédéfini à une température inférieure à la température critique prédéfinie Tₖᵣᵢₜ et à une température de valeur limite prédéfinie Tₜₕ, la température de valeur limite Tₜₕ étant inférieure à la température critique Tₖᵣᵢₜ,
- dès que la température de l'unité d'émission/de réception (5) dépasse la température critique prédéfinie Tₖᵣᵢₜ, l'appareil de commande (2) passe en mode d'économie d'énergie ou un code d'erreur est enregistré dans un but de diagnostic.

2. Procédé selon la revendication 1, **caractérisé en ce que** l'appareil de commande (2) passe en mode d'économie d'énergie, dans lequel le mode redondant de réveil de l'appareil de commande (2) et la mesure de température sur l'unité d'émission/de réception (5) de l'appareil de commande (2) sont assurés.

3. Procédé selon la revendication 1, **caractérisé en ce que**
- en atteignant une température prédéfinie T_{inf}, inférieure à la température critique prédéfinie Tₖᵣᵢₜ et supérieure à la température de valeur limite prédéfinie Tₜₕ,
- un avertissement de l'autre appareil de commande (2), du conducteur ainsi que des postes de réparation externes sur une surchauffe éventuelle s'effectue et/ou des mesures de protection préventives sont prises.

4. Procédé selon la revendication 3, **caractérisé en ce que** les mesures de protection préventives comprennent
- l'activation de l'automatisme de climatisation et/ou
- l'arrêt des sources de chaleur et/ou
- l'activation des moyens de protection contre la chaleur et/ou
- l'activation d'une fonction de mise en marche d'urgence d'un appareil de commande, lequel peut être utilisé sans fonctionnalité de réseau.

5. Procédé selon la revendication 1, **caractérisé en ce que** l'appareil de commande (2) passe en mode redondant ou est arrêté lorsque la température de l'unité d'émission/de réception (5) dépasse pendant une période donnée la température critique Tₖᵣᵢₜ ou est égale à celle-ci.

6. Procédé selon la revendication 1, **caractérisé en ce que**
- le réseau (1) est conçu comme un réseau optique à bus de données (1) pourvu d'une conduite électrique de réveil et
- le blocage des demandes de réveil s'effectue en positionnant la conduite de réveil sur la masse.

7. Procédé selon la revendication 1, **caractérisé en ce que** la température critique Tₖᵣᵢₜ correspond à la température de fonctionnement maximale des unités d'émission/de réception.
